# EUROPEAN PATENT SPECIFICATION

(11) **EP 3 439 016 B1**
(45) Date of publication and mention of the grant of the patent: **19.02.2020**
(21) Application number: 17184294.1
(22) Date of filing: 01.08.2017
(51) Int. Cl.: H01J 27/16, H04B 5/00

(54) **COMMUNICATIONS TRANSMITTER, WIRELESS COMMUNICATION APPARATUS AND METHOD**
KOMMUNIKATIONSSENDER, DRAHTLOSKOMMUNIKATIONSVORRICHTUNG UND -VERFAHREN
ÉMETTEUR DE COMMUNICATIONS, APPAREIL DE COMMUNICATION SANS FIL ET PROCÉDÉ

(43) Date of publication of application: 06.02.2019
(73) Proprietor: Vestel Elektronik Sanayi ve Ticaret A.S., 45030 Manisa (TR); Ozyegin Universitesi, 34794 Istanbul (TR)
(72) Inventor: GÜLBAHAR, Burhan, 34794 Çekmeköy/Istanbul (TR); MEMISOGLU, Gorkem, 45030 Manisa (TR)
(74) Representative: Ascherl, Andreas

(56) References cited:
- WO-A1-02/082692
- WO-A1-2011/053922
- GB-A- 2 296 369
- GUILLAUME POINT ET AL: "Plasma dynamics of a laser filamentation-guided spark", ARXIV.ORG, CORNELL UNIVERSITY LIBRARY, 201 OLIN LIBRARY CORNELL UNIVERSITY ITHACA, NY 14853, 27 August 2016 (2016-08-27), XP080722847, DOI: 10.1063/1.4962517

## Description

The present invention relates to a communications transmitter according to claim 1, a wireless communication apparatus according to claim 3, and a method of wireless communication according to claim 13.

### Background of the Invention

Existing wireless communication apparatuses and methods of wireless communication typically rely on electromagnetic radiation (such as optical, infrared or radio-frequency radiation or magneto-inductive coupling) or on acoustic radiation as the physical means for transmitting information. However such apparatuses and methods which rely on electromagnetic radiation as the physical means for transmitting information have several disadvantages, as follows. They can suffer from jamming and interference from external sources of electromagnetic radiation, as well as interference or "crosstalk" between adjacent and nearby channels. Similar disadvantages are associated with existing apparatuses and methods of wireless communication which instead rely on acoustic radiation as the physical means of communication, which can arise from external sources of sound, as well as from interference between channels. It would therefore be desirable to provide an alternative communications transmitter, wireless communication apparatus and method of wireless communication which relied on a different physical means not subject to such drawbacks.

Point, G., Arantchouk, L., Carbonnel, J., Mysyrowicz, A., & Houard, A.: "Plasma Dynamics of a Laser Filamentation-Guided Spark", Physics of Plasmas, Vol. 23, No. 9, p. 093505 (2016) describes how electrical signals may be transmitted over short distances of typically about 10 mm from a transmitting electrode to a receiving electrode by a laser-guided spark discharge plasma.

It is also known to transmit power wirelessly over large distances using plasma, but without simultaneous transmission of information through the plasma. Examples of some prior art documents which disclose such long-range wireless power transmission using plasma include CN 103326478 A, WO 2011/053922 A and CN 204960469 U. WO 02/082692 A1 discloses a transmitter according to the preamble of claim 1.

### Object of the Invention

It is therefore an object of the invention to provide a communications transmitter, a wireless communication apparatus and a method of wireless communication.

### Description of the Invention

The object of the invention is solved by a communications transmitter according to claim 1. Preferably, the communications transmitter at least comprises a transmitting electrode, a modulator, a charger, a source of ionising radiation, and a gas pressure pump. The modulator is for modulating an electrical charge to apply to the transmitting electrode with an information-bearing signal. The charger is for applying the modulated charge to the transmitting electrode. The source of ionising radiation is for at least partially ionising a body of ionisable gas in contact with the transmitting electrode, and the gas pressure pump is for imparting a velocity to the body of gas to direct it away from the transmitting electrode.

This solution is beneficial because information can thus be transmitted from the transmitting electrode as an electrical charge borne by one or more bodies of at least partially ionised gas - that is to say, plasma - emitted by the communications transmitter. Partial ionisation of such a body of gas by the source of ionising radiation results in the separation of molecules within the gas into charged species of opposite polarities (typically, positive ions on the one hand, and electrons on the other), one of which is electrically attracted towards the transmitting electrode, and the other of which is repelled by it. Such a body of gas is substantially immune to external radio-frequency sources of electromagnetic radiation, thereby rendering the transmitter invulnerable to jamming or interference. Moreover, since the plasma is electrically charged, it can also be used to transmit electrical power along with information, in a process known as simultaneous wireless information and power transfer, abbreviated as SWIPT.

The mass transfer of a body of at least partially ionised gas, or plasma, emitted by the transmitter occurs as a result of the operation of the gas pressure pump, and is instead of the propagation of a soliton-like pressure (or *p*-) acoustic wave away from the transmitter through a surrounding gaseous medium, since in the latter case, the carrier species of the surrounding medium would oscillate about a rest position as the pressure wave passed them by, and only the wave itself would propagate, which, unlike the present invention, would not therefore result in any simultaneous transfer of electrical charge by the surrounding medium. The gas pressure pump may therefore be thought of as a type of plasma "gun", for ejecting one or more bodies of at least partially ionised gas from the transmitter.

Advantageous embodiments of the invention may be configured according to any claim and/or part of the following description.

The gas pressure pump is configured to impart a velocity, *v,* to the body of ionisable gas which is preferably greater than 10 metres per second, more preferably, greater than 15 metres per second, and most preferably greater than 20 metres per second. This solution is beneficial because the higher the velocity which the gas pressure pump is able to impart to the body of ionisable gas, the further the body of ionisable gas is able to travel before recombination of charged species results in a loss of ionisation from the body of gas.

The present invention also relates to a wireless communication apparatus at least comprising such a transmitter as described herein, a receiving electrode, a channel disposed between the transmitting electrode and the receiving electrode for transporting the body of ionisable gas from the transmitting electrode to the receiving electrode, an electrical charge-measuring device for measuring an electrical charge on the receiving electrode, and a demodulator for demodulating the electrical charge measured on the receiving electrode to recover the information-bearing signal.

This solution is beneficial because by means of such an apparatus, information can be wirelessly transmitted and received by demodulating the electrical charge measured on the receiving electrode whenever a body of gas emitted from the transmitter arrives at the receiving electrode.

Preferably, the wireless communication apparatus further comprises at least one energy storage device for accumulating energy from electrical charge received by the receiving electrode. This solution is beneficial because if so, the apparatus may then also be used for SWIPT. The energy storage device may, for example, be any one or more of an electrical battery, a capacitor or a supercapacitor.

Preferably, the transmitting electrode is a cathode and the receiving electrode is an anode. This solution is beneficial because then the body of gas will then carry an excess of electrons rather than of positive ions, which since they are significantly less massive than atomic nuclei and molecular ions, are therefore also more highly mobile. However, in an alternative possible embodiment, it would instead be possible to reverse the polarity of the transmitting and receiving electrodes, which if used in combination with hydrogen as the ionisable gas, could result in the ejection of highly mobile protons from the transmitting electrode following partial ionisation of the hydrogen gas by the source of ionising radiation.

In one possible preferred embodiment, the gas pressure pump is configured to impart a velocity, *v,* to the body of ionisable gas which is greater than a separation, *d,* between the transmitting electrode and the receiving electrode divided by an ionization lifetime, τ, of the body of gas. Typically, for example, the ionization lifetime of the body of gas may be of the order of 10⁻⁶ seconds. If, for example, the separation, *d,* between the transmitting electrode and the receiving electrode is 10 µm, provided that the velocity, *v,* imparted to the body of ionisable gas by the gas pressure pump is greater than 10 ms⁻¹, then the body of ionisable gas will be able to reach the receiving electrode from the transmitting electrode before the charged species therein recombine. This solution is therefore advantageous because it allows for the possibility of short-range wireless communication in a particularly simple manner without any need for laser guiding of the plasma, for example, and may therefore find applications in micro-electromechanical machines (MEMS) and/or in nanotechnology.

In another possible preferred embodiment, the apparatus may further comprise a plurality of sources of ionising radiation distributed along the channel, and the plurality of sources may be synchronized to ionise successive bodies of gas along the channel from the transmitting electrode to the receiving electrode at successive intervals in time, each of which is substantially equal to the ionization lifetime, τ, of the successive bodies of gas. In such a way, an ionisation pathway can be opened up before (in front of) a body of gas, allowing the transfer of electrical charge between successive bodies of gas over significant distances without the need to create a permanently ionised plasma channel from the transmitting electrode to the receiving electrode. This solution is therefore advantageous because it allows for the possibility of long-range wireless communication in a particularly efficient manner and for SWIPT to take place over tens of metres or more.

Preferably, at least one of the source of ionising radiation for the body of gas when in contact with the transmitting electrode and the plurality of sources of ionising radiation distributed along the channel may be an ultraviolet light emitting diode (LED). This solution is beneficial because ultraviolet light can be tuned to the right wavelength to effect ionisation of gaseous molecules, and light emitting diodes are a particularly cheap and energy efficient way of achieving this.

In some possible preferred embodiments, at least one of the source of ionising radiation for the body of gas when in contact with the transmitting electrode and the plurality of sources of ionising radiation distributed along the channel may be a laser for guiding charged particles from the transmitting electrode to the receiving electrode. This solution is beneficial because the ionisation lifetime, τ, of the body of gas may thereby be increased and hence the separation of the transmitting electrode and the receiving electrode may therefore also be increased for a given velocity, *v,* imparted to the body of ionisable gas by the gas pressure pump, allowing for longer range wireless communication.

Preferably, the channel is evacuated to substantially less than atmospheric pressure. This solution is beneficial because it increases the ease with which the body of ionisable gas may be transported through the channel from the transmitting electrode to the receiving electrode without frictional losses, and therefore the velocity, *v,* which may be imparted to the body of ionisable gas by the gas pressure pump, thereby increasing the distances over which wireless communication may be achieved. Preferably, the channel is evacuated to less than about 50 mmHg, more preferably to less than about 20 mmHg, and most preferably to less than about 10 mmHg. In some embodiments, an additional pressure differential between the transmitter and the receiving electrode may also be maintained in order to aid the gas pressure pump and increase the velocity, *v,* which may be imparted to the body of ionisable gas by the pump.

Preferably, the apparatus further comprises a coder for applying a forward error-correction (FEC) code to the modulated charge before a body of ionisable gas is transmitted from the transmitting electrode to the receiving electrode and a decoder for decoding the measured charge after the body of ionisable gas has been received by the receiving electrode. This solution is beneficial because in embodiments of the apparatus at nanoscale or microscopic distances, Fowler-Nordheim tunnelling and other quantum-mechanical effects can create unintended discharges leading to the transmission of undesired data symbols in the information transmitted, which need to be corrected. Even at macroscopic distances, free electron emission can lead to electron avalanche discharges (Townsend or dark discharges) also requiring error correction.

In some preferred embodiments, the receiving electrode is dish-shaped and is oriented to catch a body of gas emitted by the transmitter therein. This solution is beneficial because it increases the chances of the receiving electrode catching a majority, if not all, of the charge imparted to the body of gas by the transmitting electrode in comparison to a pole-shaped electrode, thereby reducing the error rate in information transfer and increasing the power transfer in SWIPT.

The present invention further relates to a method of wireless communication. The method preferably comprises charging a transmitting electrode with electrical charge modulated with an information-bearing signal, at least partially ionising a body of gas in contact with the transmitting electrode, emitting the body of gas away from the transmitting electrode towards a receiving electrode, and upon arrival of such a body of gas at the receiving electrode, measuring an electrical charge on the receiving electrode, and demodulating the electrical charge measured on the receiving electrode to recover the information-bearing signal. The velocity, *v,* at which the body of gas is emitted from the transmitting electrode towards the receiving electrode is at least greater than a natural diffusion velocity of the body of gas. This solution is beneficial because each such body of gas may be used to encode one or more bits of information according to the amount of electrical charge they carry, so that a succession of such bodies of gas may be used to transmit a message, as well as electrical power.

In one further possible preferred embodiment, the method may further comprise synchronizing the ionisation of the body of gas when in contact with the transmitting electrode with the emission of the body of gas away from the transmitting electrode towards the receiving electrode. In other words, the emission of the body of gas away from the transmitting electrode may be timed to coincide with the ionisation of the body of gas when in contact with the transmitting electrode or to occur very shortly thereafter, and the emission of a succession of such bodies of gas away from the transmitting electrode may be timed to occur at the same temporal frequency as the ionisation of the succession of such bodies of gas. This solution is beneficial because in this way, each such body of gas may be consistently ionised before being emitted from the transmitter.

In some preferred embodiments, at least one of the ionisation of the body of gas when in contact with the transmitting electrode and the emission of the body of gas away from the transmitting electrode towards the receiving electrode may also be modulated with the information-bearing signal. This solution is beneficial because the demodulation of the charge measured at the receiving electrode may then also take into account such other factors as the degree of ionisation (including, for example, the wavelength of the ionising radiation, the strength and the temporal duration of the ionisation) of the body of gas and/or such parameters as the momentum, pressure and the velocity of transmission of the body of gas. This solution is beneficial because these other factors may then be used in secure wireless communication of information from the transmitting electrode to the receiving electrode, in order to confirm that the information-bearing signal being transmitted has not had its integrity or its security compromised. Such other parameters as the distance of the receiving electrode from the transmitting electrode and the area of the receiving electrode may also be taken into account when performing such a calculation.

The present invention further relates to a computer program product or a program code or system for executing one or more than one of the herein described methods.

Further features, goals and advantages of the present invention will now be described in association with the accompanying drawings, in which exemplary components of the invention are illustrated. Components of the devices and methods according to the invention which are at least essentially equivalent to each other with respect to their function can be marked by the same reference numerals, wherein such components do not have to be marked or described in all of the drawings.

In the following description, the invention is described by way of example only with respect to the accompanying drawings.

### Brief Description of the Drawings

Fig. 1 is a schematic diagram of an embodiment of a wireless communication apparatus;
Fig. 2 is a schematic block diagram of some physical principles underlying the present invention;
Fig. 3 is a schematic diagram of an embodiment of a short-range wireless communication apparatus; and
Fig. 4 is a schematic diagram of an embodiment of a long-range wireless communication apparatus.

### Detailed Description

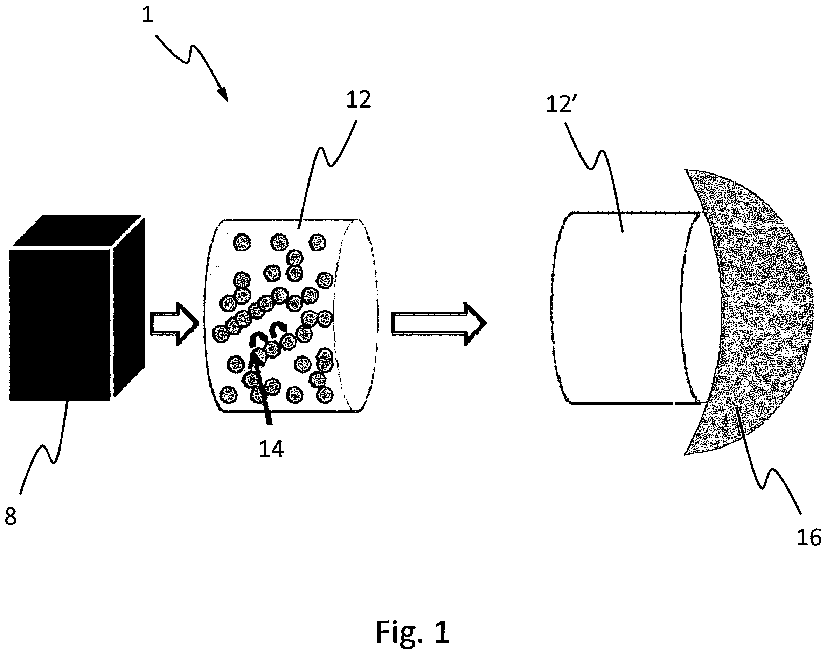

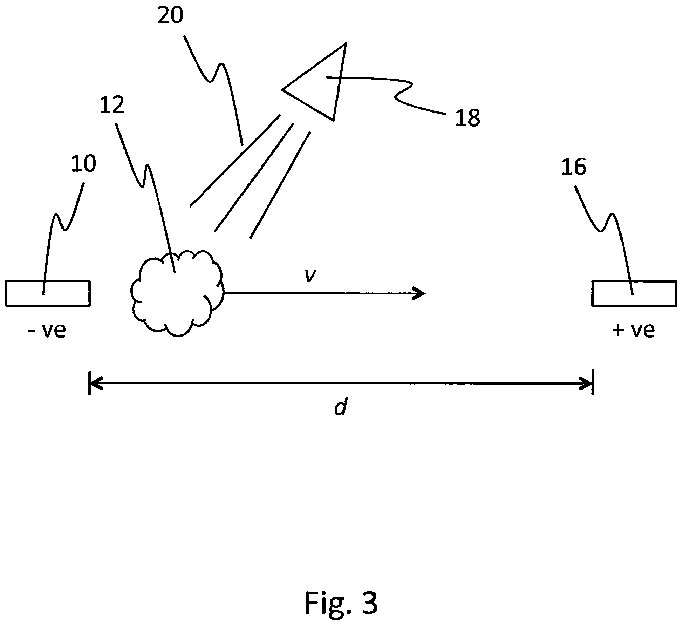

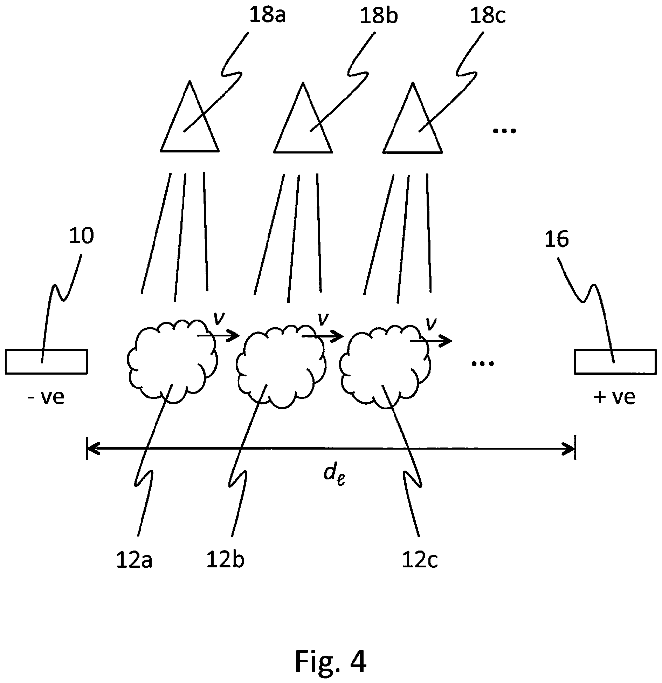

Fig. 1 schematically shows an embodiment of a wireless communication apparatus 1. The communication apparatus 1 comprises a transmitter 8 and a receiving electrode 16. The transmitter 8 comprises a transmitting electrode 10, a modulator for modulating an electrical charge to apply to the transmitting electrode 10 with an information-bearing signal, and a charger for applying the modulated charge to the transmitting electrode 10. The transmitter 8 also comprises a source of ionising radiation for at least partially ionising a body of ionisable gas 12 in contact with the transmitting electrode 10, and a gas pressure pump for imparting a velocity, *v,* to the body of gas 12 to direct it away from the transmitting electrode 10. The gas pressure pump is configured to impart a velocity, v, to the body of ionisable gas 12 which is greater than a natural diffusion velocity of the body of gas 12, and which is also greater than 10 metres per second. Further details concerning the construction and operation of the transmitter 8 will be given below in relation to Figs. 3 and 4.

Disposed between the transmitting electrode 10 and the receiving electrode 16 is a channel for transporting a body of ionisable gas 12 from the transmitting electrode 10 to the receiving electrode 16. The channel is evacuated to substantially less than atmospheric pressure (less than 10 mmHg) to enable this transport to take place with little or no frictional losses. The receiving electrode 16 has a dish-like shape and is oriented to catch the body of gas 12 emitted by the transmitter 8 therein. The receiving electrode 16 may, for example, have the shape of a paraboloid. Fig. 1 represents how the body of gas 12 ejected from the transmitter 8 by the gas pressure pump is transported through the channel to a location 12', where it is caught by the receiving electrode 16. The communication apparatus 1 further comprises an electrical charge-measuring device for measuring an electrical charge on the receiving electrode and a demodulator for demodulating the electrical charge measured on the receiving electrode 16 to recover the information-bearing signal (neither of which is visible in Fig. 1).

During operation of the communication apparatus 1, the transmitting electrode 10 of the transmitter 8 is able to impart the body of gas 12 with an electrical charge. The electrical charge imparted to the body of gas 12 by the transmitting electrode 10 is in accordance with the information-bearing signal with which the charge is modulated. The modulation of the electrical charge may be amplitude or frequency modulation, or a combination of both. The body of gas 12 comprises an ionisable gas, such as oxygen or nitrogen, which can be at least partially ionised. The source of ionising radiation of transmitter 8 can also ionise the body of gas 12. This results in the dissociation of electrons from gas molecules within the body of gas 12 to form free electrons and positively charged ions. If the transmitting electrode 10 is a negatively charged electrode (*i.e.* a cathode), the positively charged ions are attracted towards the transmitting electrode 10, whereas the negatively charged electrons are repelled by it. Thus the transmitter 8 can impart the body of gas 12 with an electrical charge which is proportional to the charge on the transmitting electrode 10. The resulting charged plasma is ejected from the transmitter 8 at high speed by the gas pressure pump of the transmitter 8. The ionisation of the body of gas 12 when in contact with the transmitting electrode 10 is synchronized with the emission of the body of gas away from the transmitting electrode 10 towards the receiving electrode 16. Thus a series of such bodies of gas 12 may be successively ionised and ejected by the transmitter 8.

As denoted in Fig. 1 by reference numeral 14, energy is transferred between the charged species within the body of gas 12 following its ejection from the transmitter 8. This transfer of energy may occur spontaneously or it may be induced by collisions between free electrons, until eventually, the charged species within the plasma would recombine to form a neutral gas over a period of time which is empirically measurable as the ionization lifetime, τ, of the body of gas 12.

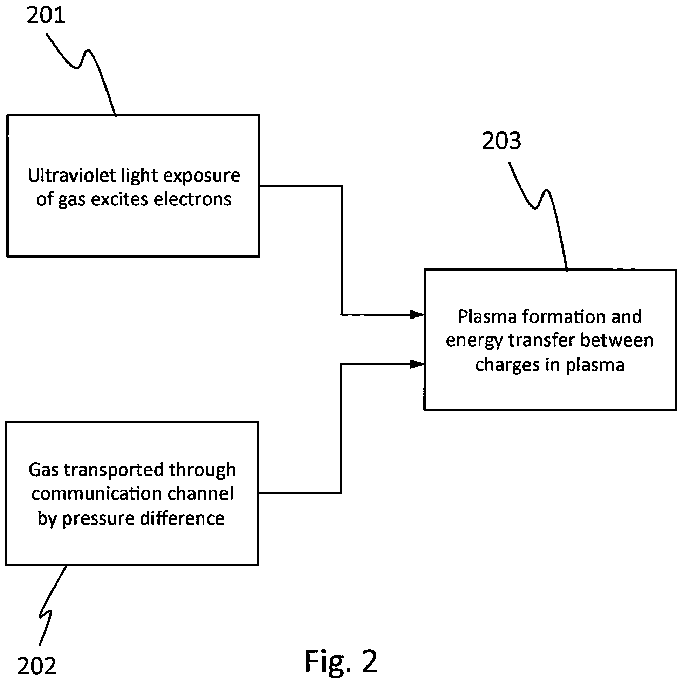

Fig. 2 schematically represents the physical principles underlying this process. In box 201, exposure of the body of gas 12 to ultraviolet light excites electrons from their ground states within the gas molecules leading to partial ionization of the gas. In box 202, the body of gas 12 is transported through the communication channel by a pressure difference between the transmitter 8 and the receiving electrode 16 which is created by the gas pressure pump of the transmitter 8. In box 203, an electrically charged plasma is formed and energy is transferred between charges in the plasma.

Fig. 3 schematically shows an embodiment of a short-range wireless communication apparatus. In this embodiment, the transmitting electrode 10 is a negatively charged cathode and the receiving electrode 16 is a positively charged anode. The apparatus also comprises a source of ionising radiation 18, such as an ultraviolet LED, which illuminates each body of gas 12 ejected from the transmitting electrode 10 with ultraviolet light 20. In this case, the transmitting electrode 10 and the receiving electrode 16 have a separation, *d.* The gas pressure pump of the transmitter 8 is configured to impart a velocity, *v,* to the body of ionisable gas 12 which is greater than the separation, *d,* divided by the ionization lifetime, τ, of the body of gas 12. Thus the body of gas 12 is able to reach the receiving electrode 16 before the charged species in it have recombined, and the electrical charge imparted to the body of gas 12 by the transmitting electrode 10 can therefore be transferred to the receiving electrode 16, where it can be measured and demodulated, in order to recover the information-bearing signal with which the charge on the transmitting electrode 10 was modulated, also taking account of such other parameters of the system as the velocity, *v,* and the separation, *d.* Such a short-range wireless communication apparatus as that shown in Fig. 3 is suitable for use in nanotechnological applications.

Fig. 4 schematically shows an embodiment of a long-range wireless communication apparatus. In this embodiment, the transmitting electrode 10 is again a negatively charged cathode and the receiving electrode 16 is again a positively charged anode. In this case, the apparatus further comprises a plurality of sources 18a, 18b, 18c of ionising radiation distributed along the communication channel between the transmitting electrode 10 and the receiving electrode 16. The plurality of sources 18a, 18b, 18c of ionising radiation are synchronized to ionise successive ones of bodies 12a, 12b, 12c of gas along the channel from the transmitting electrode 10 to the receiving electrode 16 at successive intervals in time, each of which is substantially equal to the ionization lifetime, τ, of the successive bodies 12a, 12b, 12c of gas. Thus, for example, if the ionization lifetime, τ, of the successive bodies 12a, 12b, 12c of gas is 1 µs, source 18a of ionising radiation firstly illuminates body of gas 12a with ionising radiation for approximately 1 µs, then the source 18b of ionising radiation illuminates body of gas 12b with ionising radiation for approximately 1 µs, then source 18c of ionising radiation illuminates body of gas 12c with ionising radiation for approximately 1 µs, and so on, along the channel.

The separation, 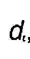 , of the transmitting electrode 10 and the receiving electrode 16 from each other is very much greater than a product between this ionization lifetime, τ, and the velocity, *v*, which was imparted to the successive bodies 12a, 12b, 12c of gas by the gas pressure pump of the transmitter 8. However, the ionisation of the successive bodies 12a, 12b, 12c of gas in turn from the transmitting electrode 10 to the receiving electrode 16 opens up an ionisation pathway before (that is to say, in front of) each successive body 12a, 12b, 12c of gas, thereby allowing the transfer of electrical charge between the successive bodies of gas over the very much greater distance, 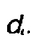 . Furthermore, the plurality of sources 18a, 18b, 18c of ionising radiation in this embodiment are also lasers, which help guide the charged particles from the transmitting electrode 10 to the receiving electrode 16. Thus an information-bearing signal can be transmitted over significant distances without the need to create a continuous ionised plasma channel stretching all the way from the transmitting electrode 10 to the receiving electrode 16. Such a long-range wireless communication apparatus as that shown in Fig. 4 is therefore suitable for use in applications requiring the transmission of information over macroscopic distances.

The receiving electrodes 16 in either of the wireless communication apparatuses shown in Figs. 3 and 4 may respectively be connected to an energy storage device for accumulating energy from electrical charge received by the receiving electrode 16. Thus either apparatus may then also be used for SWIPT. The energy storage device may, for example, be any one or more of an electrical battery, a capacitor or a supercapacitor.

Furthermore, either apparatus may further comprise a coder for applying a forward error-correction (FEC) code to the modulated charge before a body of ionisable gas 12 is transmitted from the transmitting electrode 10 to the receiving electrode 16 and a decoder for decoding the measured charge after the body of ionisable gas has been received by the receiving electrode 16.

Apparatuses for and methods of wireless communication according to the invention are particularly suitable for use in applications requiring the secure transmission of information. One or both of the ionisation of the body of gas 12 when in contact with the transmitting electrode 10 and the emission of the body of gas 12 away from the transmitting electrode 10 may also be modulated with the information-bearing signal with which the charge imparted to the body of gas 12 by the transmitting electrode 10 is modulated. When the charge measured at the receiving electrode is demodulated, such other factors as the degree of ionisation of the body of gas 12 (including, for example, the wavelength of the ionising radiation used, the strength and the temporal duration of the ionisation) and/or such parameters as the momentum, pressure and the velocity, *v,* of transmission of the body of gas 12 can then also take into account, in order to confirm that the information-bearing signal being transmitted has not had its integrity or its security compromised.

In summary, therefore, the present invention provides a communications transmitter, which is suitable for wireless communication. The transmitter at least comprises a transmitting electrode, a modulator for modulating an electrical charge to apply to the transmitting electrode with an information-bearing signal, a charger for applying the modulated charge to the transmitting electrode, a source of ionising radiation for at least partially ionising a body of ionisable gas in contact with the transmitting electrode, and a gas pressure pump for imparting a velocity, *v,* to the body of gas, in order to direct the body of gas away from the transmitting electrode more rapidly than a natural diffusion velocity of the body of gas. This transmitter can be incorporated into a wireless communications apparatus, along with a receiving electrode, a channel disposed between the transmitting electrode and the receiving electrode for transporting the body of ionisable gas from the transmitting electrode to the receiving electrode, an electrical charge-measuring device for measuring an electrical charge on the receiving electrode, and a demodulator for demodulating the electrical charge measured on the receiving electrode, in order to recover the information-bearing signal. The present invention also provides a corresponding method of wireless communication using an at least partially ionised body of gas (*i.e*. a plasma) as the communication medium, which is substantially immune to external radio-frequency sources of electromagnetic radiation, thereby rendering it invulnerable to jamming or interference. Moreover, since the plasma is electrically charged, it can also be used to transmit electrical power along with information, in simultaneous wireless information and power transfer (SWIPT).

**Reference Numerals:**

| | | | |
|---|---|---|---|
| 1 | Wireless communication apparatus | 16 | Receiving electrode |
| 8 | Transmitting unit | 18 | Source of ionising radiation |
| 10 | Transmitting electrode | 18a, 18b, 18c | Successive sources of ionising radiation in channel |
| 12 | Body of ionisable gas emitted by transmitting unit | 20 | Ultraviolet radiation |
| 12' | Displaced same body of ionisable gas | 201 | Exposure of gas to ultraviolet light excites electrons |
| 12a, 12b, 12c | Successive bodies of ionisable gas emitted by transmitting unit | 202 | Gas transported through communication channel by pressure difference |
| 14 | Energy transfer between plasma electrons in body of gas | 203 | Plasma formation and energy transfer between charges in plasma |

## Claims

1. A communications transmitter (8) at least comprising:
a transmitting electrode (10);
a modulator for modulating an electrical charge to apply to the transmitting electrode (10) with an information-bearing signal;
a charger for applying the modulated charge to the transmitting electrode;
a source (18) of ionising radiation for at least partially ionising a body of ionisable gas (12, 12'; 12a, 12b, 12c) in contact with the transmitting electrode (10); and **characterised in that** the communications transmitter further comprises
a gas pressure pump for imparting a velocity (*v*) to the body of gas (12, 12'; 12a, 12b, 12c) to direct it away from the transmitting electrode (10).

2. A communications transmitter according to claim 1, wherein the gas pressure pump is configured to impart a velocity (*v*) to the body of ionisable gas (12, 12'; 12a, 12b, 12c) greater than 10 metres per second.

3. A wireless communication apparatus (1) at least comprising:
a transmitter (8) according to claim 1 or claim 2;
a receiving electrode (16);
a channel disposed between the transmitting electrode (10) and the receiving electrode (16) for transporting the body of ionisable gas (12, 12'; 12a, 12b, 12c) from the transmitting electrode to the receiving electrode;
an electrical charge-measuring device for measuring an electrical charge on the receiving electrode (16); and
a demodulator for demodulating the electrical charge measured on the receiving electrode (16) to recover the information-bearing signal.

4. A wireless communication apparatus according to claim 3, further comprising at least one energy storage device for accumulating energy from electrical charge received by the receiving electrode (16).

5. A wireless communication apparatus according to claim 3 or claim 4, wherein the transmitting electrode (10) is a cathode and the receiving electrode (16) is an anode.

6. A wireless communication apparatus according to any one of claims 3 to 5, wherein the gas pressure pump is configured to impart a velocity (*v*) to the body of ionisable gas (12, 12'; 12a, 12b, 12c) which is greater than a separation (*d*) between the transmitting electrode (10) and the receiving electrode (16) divided by an ionization lifetime (τ) of the body of gas.

7. A wireless communication apparatus according to any one of claims 3 to 6, further comprising a plurality of sources (18a, 18b, 18c) of ionising radiation distributed along the channel, and wherein the plurality of sources (18a, 18b, 18c) of ionising radiation are synchronized to ionise successive bodies (12a, 12b, 12c) of gas along the channel from the transmitting electrode (10) to the receiving electrode (16) at successive intervals in time, each of which is substantially equal to the ionization lifetime (τ) of the successive bodies (12a, 12b, 12c) of gas.

8. A wireless communication apparatus according to any one of claims 3 to 7, wherein at least one of the source (18) of ionising radiation and the plurality of sources (18a, 18b, 18c) of ionising radiation is an ultraviolet light emitting diode (LED).

9. A wireless communication apparatus according to any one of claims 3 to 8, wherein at least one of the source (18) of ionising radiation and the plurality of sources (18a, 18b, 18c) of ionising radiation is a laser for guiding charged particles from the transmitting electrode (10) to the receiving electrode (16).

10. A wireless communication apparatus according to any one of claims 3 to 9, wherein the channel is evacuated to substantially less than atmospheric pressure.

11. A wireless communication apparatus according to any one of claims 3 to 10, further comprising:
a coder for applying a forward error-correction code to the modulated electrical charge; and
a decoder for decoding the measured charge.

12. A wireless communication apparatus according to any one of claims 3 to 11, wherein the receiving electrode (16) is dish-shaped and is oriented to catch a body of gas emitted by the transmitter (8) therein.

13. A method of wireless communication, the method at least comprising:
charging a transmitting electrode (10) with electrical charge modulated with an information-bearing signal;
at least partially ionising a body of gas (12, 12'; 12a, 12b, 12c) in contact with the transmitting electrode (10);
emitting the body of gas away from the transmitting electrode (10) towards a receiving electrode (16) at a velocity, *v,* greater than a natural diffusion velocity of the body of gas;
upon arrival of such a body of gas at the receiving electrode (16), measuring an electrical charge on the receiving electrode; and
demodulating the electrical charge measured on the receiving electrode (16) to recover the information-bearing signal.

14. A method according to claim 13, further comprising synchronizing the ionisation of the body of gas (12, 12'; 12a, 12b, 12c) when in contact with the transmitting electrode (10) with the emission of the body of gas away from the transmitting electrode (10) towards the receiving electrode (16).

15. A method according to claim 13 or claim 14, further comprising modulating at least one of:
the ionisation of the body of gas (12, 12'; 12a, 12b, 12c) when in contact with the transmitting electrode (10); and
the emission of the body of gas away from the transmitting electrode (10) towards the receiving electrode (16);
with the information-bearing signal.

## Patentansprüche

1. Ein Kommunikationssender (8), der zumindest umfasst:
eine Sendeelektrode (10);
einen Modulator zum Modulieren einer elektrischen Ladung, die auf die Sendeelektrode (10) mit einem informationstragenden Signal aufzubringen ist;
ein Aufladegerät zum Anlegen der modulierten Ladung an die Sendeelektrode;
eine Quelle (18) ionisierender Strahlung zum zumindest teilweisen Ionisieren eines Körpers aus ionisierbarem Gas (12, 12'; 12a, 12b, 12c) in Kontakt mit der Sendeelektrode (10); und
**dadurch gekennzeichnet, dass** der Kommunikationssender ferner umfasst
eine Gasdruckpumpe zum Aufbringen einer Geschwindigkeit (v) auf den Gaskörper (12, 12'; 12a, 12b, 12c), um ihn von der Sendeelektrode (10) wegzuführen.

2. Kommunikationssender nach Anspruch 1, wobei die Gasdruckpumpe konfiguriert ist, um dem Körper aus ionisierbarem Gas (12, 12'; 12a, 12b, 12c) eine Geschwindigkeit (v) von mehr als 10 Metern pro Sekunde zu verleihen.

3. Eine drahtlose Kommunikationsvorrichtung (1), die zumindest umfasst:
einen Sender (8) nach Anspruch 1 oder Anspruch 2;
eine Empfangselektrode (16);
einen Kanal, der zwischen der Sendeelektrode (10) und der Empfangselektrode (16) angeordnet ist, um den Körper aus ionisierbarem Gas (12, 12'; 12a, 12b, 12c) von der Sendeelektrode zur Empfangselektrode zu transportieren;
eine elektrische Ladungsmessvorrichtung zum Messen einer elektrischen Ladung an der Empfangselektrode (16); und
einen Demodulator zum Demodulieren der an der Empfangselektrode (16) gemessenen elektrischen Ladung, um das informationstragende Signal zurückzugewinnen.

4. Drahtlose Kommunikationsvorrichtung nach Anspruch 3, ferner umfassend mindestens eine Energiespeichervorrichtung zum Akkumulieren von Energie aus elektrischer Ladung, die von der Empfangselektrode (16) empfangen wird.

5. Drahtlose Kommunikationsvorrichtung nach Anspruch 3 oder Anspruch 4, wobei die Sendeelektrode (10) eine Kathode und die Empfangselektrode (16) eine Anode ist.

6. Drahtlose Kommunikationsvorrichtung nach einem der Ansprüche 3 bis 5, wobei die Gasdruckpumpe konfiguriert ist, um dem Körper aus ionisierbarem Gas (12, 12'; 12a, 12b, 12c) eine Geschwindigkeit (v) zu verleihen, die größer ist als ein Abstand (d) zwischen der Sendeelektrode (10) und der Empfangselektrode (16), geteilt durch eine lonisationslebensdauer (τ) des Körpers aus Gas.

7. Drahtlose Kommunikationsvorrichtung nach einem der Ansprüche 3 bis 6, die ferner eine Vielzahl von Quellen (18a, 18b, 18c) ionisierender Strahlung umfasst, die entlang des Kanals verteilt sind, und wobei die Vielzahl von Quellen (18a, 18b, 18c) ionisierender Strahlung synchronisiert sind, um aufeinanderfolgende Körper (12a) zu ionisieren, 12b, 12c) von Gas entlang des Kanals von der Sendeelektrode (10) zur Empfangselektrode (16) in aufeinanderfolgenden Zeitabständen, von denen jeder im Wesentlichen gleich der lonisationslebensdauer (τ) der aufeinanderfolgenden Gaskörper (12a, 12b, 12c) ist.

8. Drahtlose Kommunikationsvorrichtung nach einem der Ansprüche 3 bis 7, wobei mindestens eine der Quellen (18) für ionisierende Strahlung und die Vielzahl von Quellen (18a, 18b, 18c) für ionisierende Strahlung eine ultraviolette lichtemittierende Diode (LED) ist.

9. Drahtlose Kommunikationsvorrichtung nach einem der Ansprüche 3 bis 8, wobei mindestens eine der Quellen (18) für ionisierende Strahlung und die Vielzahl von Quellen (18a, 18b, 18c) für ionisierende Strahlung ein Laser zum Führen geladener Partikel von der Sendeelektrode (10) zur Empfangselektrode (16) ist.

10. Drahtlose Kommunikationsvorrichtung nach einem der Ansprüche 3 bis 9, wobei der Kanal auf einen Druck evakuiert wird, der wesentlich unter dem Atmosphärendruck liegt.

11. Drahtlose Kommunikationsvorrichtung nach einem der Ansprüche 3 bis 10, ferner umfassend:
einen Codierer zum Aufbringen eines Vorwärts-Fehlerkorrekturcodes auf die modulierte elektrische Ladung; und
einen Decoder zum Decodieren der gemessenen Ladung.

12. Drahtlose Kommunikationsvorrichtung nach einem der Ansprüche 3 bis 11, wobei die Empfangselektrode (16) schalenförmig ist und so ausgerichtet ist, dass sie einen Gaskörper auffängt, der von dem Sender (8) darin emittiert wird.

13. Verfahren zur drahtlosen Kommunikation, wobei das Verfahren zumindest umfasst:
Laden einer Sendeelektrode (10) mit elektrischer Ladung, die mit einem informationstragenden Signal moduliert ist;
zumindest teilweise Ionisieren eines Gaskörpers (12, 12'; 12a, 12b, 12c) in Kontakt mit der Sendeelektrode (10);
Abgeben des Gaskörpers weg von der Sendeelektrode (10) zu einer Empfangselektrode (16) mit einer Geschwindigkeit, v, die größer als eine natürliche Diffusionsgeschwindigkeit des Gaskörpers ist;
beim Eintreffen eines solchen Gaskörpers an der Empfangselektrode (16) eine elektrische Ladung an der Empfangselektrode misst; und
Demodulieren der an der Empfangselektrode (16) gemessenen elektrischen Ladung, um das informationstragende Signal zurückzugewinnen.

14. Verfahren nach Anspruch 13, ferner umfassend das Synchronisieren der Ionisation des Gaskörpers (12, 12'; 12a, 12b, 12c) in Kontakt mit der Sendeelektrode (10) mit der Emission des Gaskörpers weg von der Sendeelektrode.

15. Verfahren nach Anspruch 13 oder Anspruch 14, ferner umfassend das Modulieren von mindestens einem von:
der Ionisierung des Gaskörpers (12, 12'; 12a, 12b, 12c) in Kontakt mit der Sendeelektrode (10); und
der Emission des Gaskörpers weg von der Sendeelektrode (10) in Richtung der Empfangselektrode (16);
mit dem informationstragenden Signal.

## Revendications

1. Un émetteur de communication (8) comprenant au moins :
une électrode émettrice (10) ;
un modulateur pour moduler une charge électrique à appliquer à l'électrode d'émission (10) avec un signal porteur d'informations ;
un appareil de charge pour appliquer la charge modulée à l'électrode d'émission;
une source (18) de rayonnement ionisant pour ioniser au moins partiellement un corps de gaz ionisable (12, 12' ; 12a, 12b, 12c) en contact avec ladite électrode émettrice (10) ; et
**caractérisé en ce que** l'émetteur de communication comprend en outre
une pompe à gaz sous pression pour appliquer une vitesse (v) au corps du gaz (12, 12' ; 12a, 12b, 12c) pour le guider à l'écart de l'électrode émettrice (10).

2. Émetteur de communication selon la revendication 1, dans lequel la pompe à gaz sous pression est configurée pour donner une vitesse (v) de plus de 10 mètres par seconde au corps du gaz ionisable (12, 12' ; 12a, 12b, 12c).

3. Un dispositif de communication sans fil (1) comprenant au moins :
un émetteur (8) selon la revendication 1 ou la revendication 2 ;
une électrode de réception (16) ;
un canal disposé entre l'électrode d'émission (10) et l'électrode de réception (16) pour transporter le corps de gaz ionisable (12, 12' ; 12a, 12b, 12c) de l'électrode d'émission à l'électrode de réception ;
un dispositif de mesure de charge électrique pour mesurer une charge électrique à l'électrode de réception (16) ; et
un démodulateur pour démoduler la charge électrique mesurée à l'électrode de réception (16) pour récupérer le signal porteur d'informations.

4. dispositif de communication sans fil selon la revendication 3 comprenant en outre au moins un dispositif de stockage d'énergie pour accumuler de l'énergie provenant d'une charge électrique reçue de l'électrode de réception (16).

5. Dispositif de communication sans fil selon la revendication 3 ou 4, dans lequel l'électrode d'émission (10) est une cathode et l'électrode de réception (16) est une anode.

6. Dispositif de communication sans fil selon l'une quelconque des revendications 3 à 5, dans lequel la pompe à gaz sous pression est configurée pour conférer au corps de gaz ionisable (12, 12' ; 12a, 12b, 12c) une vitesse (v) supérieure à une distance (d) entre l'électrode émettrice (10) et l'électrode réceptrice (16) divisée par une durée de vie (τ) du corps du gaz.

7. Dispositif de communication sans fil selon l'une quelconque des revendications 3 à 6 comprenant en outre une pluralité de sources de rayonnement ionisant (18a, 18b, 18c) réparties le long du canal, et dans lequel la pluralité des sources de rayonnement ionisant (18a, 18b, 18c) sont synchronisées, pour ioniser des corps successifs (12a), 12b, 12c) de gaz le long du canal entre l'électrode émettrice (10) et l'électrode réceptrice (16) à des intervalles de temps successifs sensiblement égaux chacun à la durée de vie d'ionisation (τ) des corps successifs (12a, 12b, 12c) des gaz.

8. Dispositif de communication sans fil selon l'une quelconque des revendications 3 à 7, dans lequel au moins l'une des sources (18) de rayonnement ionisant et la pluralité de sources (18a, 18b, 18c) de rayonnement ionisant est une diode émettrice de lumière ultraviolette (DEL).

9. Dispositif de communication sans fil selon l'une quelconque des revendications 3 à 8, dans lequel au moins l'une des sources (18) de rayonnement ionisant et la pluralité de sources (18a, 18b, 18c) de rayonnement ionisant est un laser pour guider des particules chargées depuis l'électrode émettrice (10) vers l'électrode réceptrice (16).

10. Dispositif de communication sans fil selon l'une quelconque des revendications 3 à 9, dans lequel le canal est évacué à une pression sensiblement inférieure à la pression atmosphérique.

11. Dispositif de communication sans fil selon l'une quelconque des revendications 3 à 10, comprenant en outre :
un codeur pour appliquer un code de correction d'erreur directe à ladite charge électrique modulée ; et
un décodeur pour décoder la charge mesurée.

12. Dispositif de communication sans fil selon l'une quelconque des revendications 3 à 11, dans lequel l'électrode de réception (16) est en forme de coupelle et orientée pour recevoir un corps gazeux émis dans celle-ci par l'émetteur (8).

13. Procédé de communication sans fil, le procédé comprenant au moins :
charger une électrode émettrice (10) avec une charge électrique modulée par un signal porteur d'informations ;
ioniser au moins partiellement un corps gazeux (12, 12' ; 12a, 12b, 12c) en contact avec l'électrode émettrice (10) ;
décharger le corps gazeux depuis l'électrode émettrice (10) vers une électrode réceptrice (16) à une vitesse, v, supérieure à une vitesse de diffusion naturelle du corps gazeux ;
à l'arrivée d'un tel corps gazeux à l'électrode de réception (16), mesure une charge électrique à l'électrode de réception ; et
Démodulation de la charge électrique mesurée à l'électrode de réception (16) pour récupérer le signal porteur d'information.

14. Procédé selon la revendication 13, comprenant en outre la synchronisation de l'ionisation du corps gazeux (12, 12' ; 12a, 12b, 12c) en contact avec l'électrode émettrice (10) avec l'émission du corps gazeux en dehors de l'électrode émettrice.

15. Procédé selon la revendication 13 ou la revendication 14 comprenant en outre la modulation d'au moins l'un de :
ioniser ledit corps gazeux (12, 12' ; 12a, 12b, 12c) en contact avec ladite électrode émettrice (10) ; et
l'émission du corps gazeux depuis l'électrode émettrice (10) vers l'électrode réceptrice (16) ;
avec le signal porteur d'informations.
